# EUROPEAN PATENT SPECIFICATION

(11) **EP 4 219 311 B1**
(45) Date of publication and mention of the grant of the patent: **09.07.2025**
(21) Application number: 23153150.0
(22) Date of filing: 24.01.2023
(51) Int. Cl.: B64D 15/04, G01K 11/06, B64D 29/00, B64D 33/02, G01K 3/00, G01M 3/00, G01M 3/02, G01K 13/024

(54) **LEAK DETECTION SYSTEM FOR ANTI-ICE DUCTS**
LECKDETEKTIONSSYSTEM FÜR EISSCHUTZKANÄLE
SYSTÈME DE DÉTECTION DE FUITE POUR CONDUITS ANTI-GIVRE

(30) Priority: 27.01.2022 US 202217586531
(43) Date of publication of application: 02.08.2023
(73) Proprietor: Rohr, Inc., Chula Vista, CA 91910-2098 (US)
(72) Inventor: BJORNSSON, Philip J., Chula Vista, 91910 (US); OEI, William, San Diego, 92130 (US)
(74) Representative: Dehns

(56) References cited:
- DE-A1- 19 717 767
- GB-A- 1 584 177
- US-A- 3 548 780
- US-A- 5 046 447
- US-A1- 2016 167 792
- US-A1- 2020 189 750

## Description

### FIELD

The present disclosure (invention) relates to gas turbine engines and, more particularly, to anti-ice systems used in aircraft nacelles that surround gas turbine engines.

### BACKGROUND

During operation of an aircraft, atmospheric conditions may lead to the formation of ice on the surfaces of the aircraft. Ice formation on aircraft surfaces, such as on the inlet of a gas turbine engine nacelle, is undesirable and can lead to potentially compromised flying conditions. For example, the formation and accretion of ice on aircraft surfaces may adversely affect the performance of the aircraft by altering the shape of various aerodynamic surfaces of the aircraft. Further, ice accretion on the nacelle inlet surfaces of a gas turbine engine may detach and be drawn through the engine, resulting in the potential for damage to the engine.

To address the above concerns, aircraft may include anti-icing systems to prevent ice formation and accretion on, or to remove ice from, aircraft surfaces. One method of implementing such anti-icing systems is to direct heated gases from the gas turbine engine (*e.g.,* engine bleed air) to interior or exterior surfaces of the aircraft, thereby increasing the temperature of the targeted surfaces. These anti-icing systems may use a double duct configuration to transmit heated gases from the gas turbine engine to the targeted aircraft surface, thereby minimizing the risk of damage to aircraft components (*e.g*., the acoustic composite structure defining an inner wall of a nacelle inlet) as a result of a ruptured duct.

Although risk of damage may be minimized, an undetected leak may result in damage if left unaddressed. In this regard, an undetected leak in the anti-icing air duct may result in permanent nacelle component damage, airplane delays, and/or flight cancellations.

US 2020/189750 A1 relates to anti-ice systems used in aircraft nacelles that surround gas turbine engines.

US 5046447 A relates to non-resettable, overtemperature sensing devices for indicating when a predetermined temperature limit has been reached in a fluid conduit.

### SUMMARY

According to a first aspect of the invention, an inlet cowl is as claimed in claim 1.

According to another aspect of the invention, a method for installing an overtemperature indication assembly is as claimed in claim 10.

Various embodiments of the invention are set out in the dependent claims.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A is a perspective view of an aircraft having a gas turbine engine, in accordance with various embodiments;
FIG. 1B is a side, cross sectional view of a gas turbine engine, in accordance with various embodiments;
FIG. 1C illustrates a perspective view of a fan cowl having a leak detection system, in accordance with various embodiments;
FIG. 2 illustrates a cross-sectional view of an inlet cowl, in accordance with various embodiments;
FIG. 3A illustrates a leak detection system in a retracted state, in accordance with various embodiments;
FIG. 3B illustrates a leak detection system in a deployed state, in accordance with various embodiments; and
FIG. 4 illustrates a retrofit process, in accordance with various embodiments.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

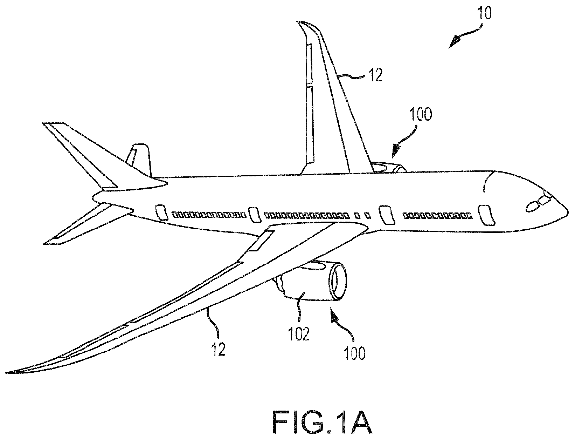

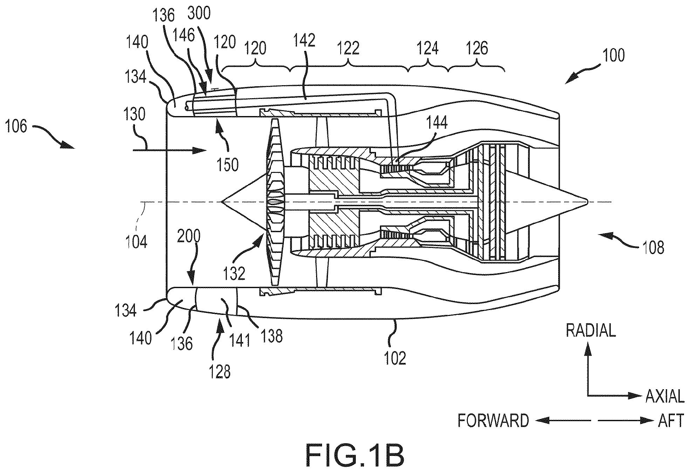

Referring to FIGS. 1A and 1B, an aircraft 10 includes a gas turbine engine 100 mounted to, for example, a wing 12 of the aircraft 10. The gas turbine engine 100 includes a nacelle 102 defining a housing of the gas turbine engine 100 about a longitudinal axis 104. The longitudinal axis 104 extends through the center of the gas turbine engine 100 between a forward end 106 and an aft end 108 of the gas turbine engine 100. The gas turbine engine 100 generally includes a fan section 120, a compressor section 122, a combustor section 124 and a turbine section 126. The nacelle 102 includes an inlet cowl 200. The inlet cowl 200 comprises an inlet surface 128 for directing an air flow 130 toward the fan section 120 and through an inlet section 132. Because the inlet surface 128 is located at the forward end 106, and therefore not heated directly by the gas turbine engine 100, the inlet surface 128 is prone to the accumulation of ice, especially along a forward lip surface 134 (*i.e.,* the leading edge of the nacelle 102).

The inlet cowl 200 of the nacelle 102 includes a forward bulkhead 136 and an aft bulkhead 138, both of which are annularly arranged about the longitudinal axis 104. The inlet cowl 200 comprises a forward plenum 140 and an aft plenum 141. The forward plenum 140 is defined axially in the inlet cowl 200 between the forward lip surface 134 and the forward bulkhead 136 and radially between a radially inner wall 152 of the inlet cowl 200 and a radially outer wall 154 of the inlet cowl 200. The aft plenum 141 is defined axially in the inlet cowl 200 between the forward bulkhead 136 and the aft bulkhead 138 and radially between the radially inner wall 152 of the inlet cowl 200 and the radially outer wall 154 of the inlet cowl 200. The forward plenum 140 is configured to receive a heated gas that flows through the forward plenum 140 to perform the anti-icing function. The heated gas is directed to the forward plenum 140 via a fluid conduit 142 configured to bleed the heated gas from the compressor section 122. The fluid conduit 142 extends from a tap 144 at the compressor section 122 and extends to a duct system 146 that extends through the aft plenum 141 from the aft bulkhead 138 to the forward bulkhead 136.

In various embodiments, the duct system 146 may comprise a double-walled duct. In various embodiments, an anti-icing system 150 is configured to deliver the heated gas (*e.g.,* hot air bled from the compressor section 122 of the gas turbine engine 100) to the forward plenum 140 to prevent the formation of ice on the forward lip surface 134.

The nacelle 102 comprises a detection system 300 coupled to the inlet cowl 200. The detection system 300 is configured to provide a physical indicator in response to a temperature in the aft plenum 141 exceeding a temperature threshold. In this regard, the detection system 300 may be configured to be in a retracted state during normal operation of the gas turbine engine 100 and in a deployed state in response to being activated (i.e., in response to the aft plenum 141 exceeding the temperature threshold). In various embodiments, the detection system 300 may be disposed on the radially outer wall 154 of the inlet cowl 200. However, the present disclosure is not limited in this regard. For example, the detection system 300 may be disposed on the aft bulkhead 138 in a location that would be visible during maintenance. In various embodiments. the detection system 300 is disposed proximal the fluid conduit 142 extending through the aft plenum 141. In various embodiments, a portion of the detection system 300 extends into the aft plenum 141 as described further herein.

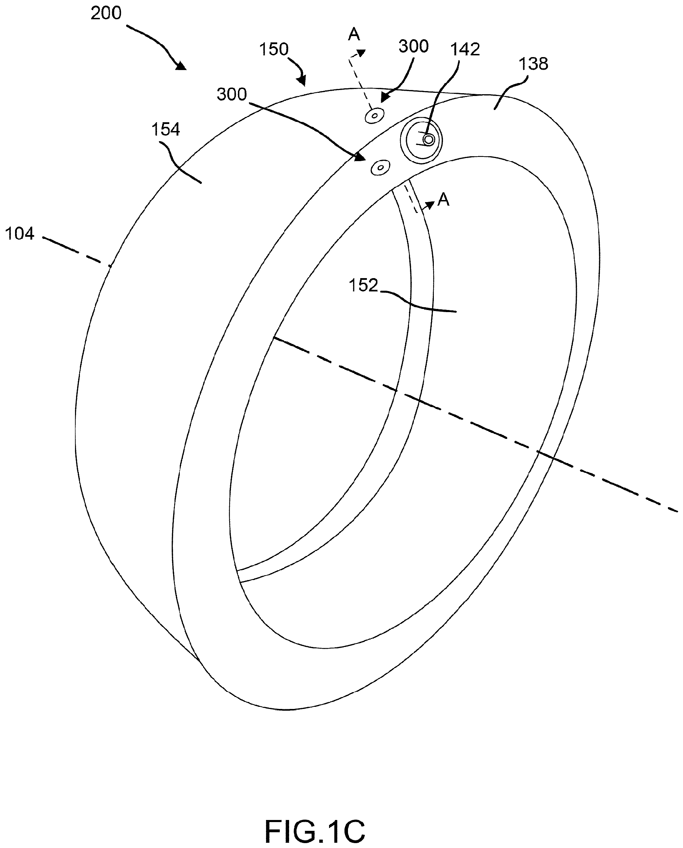

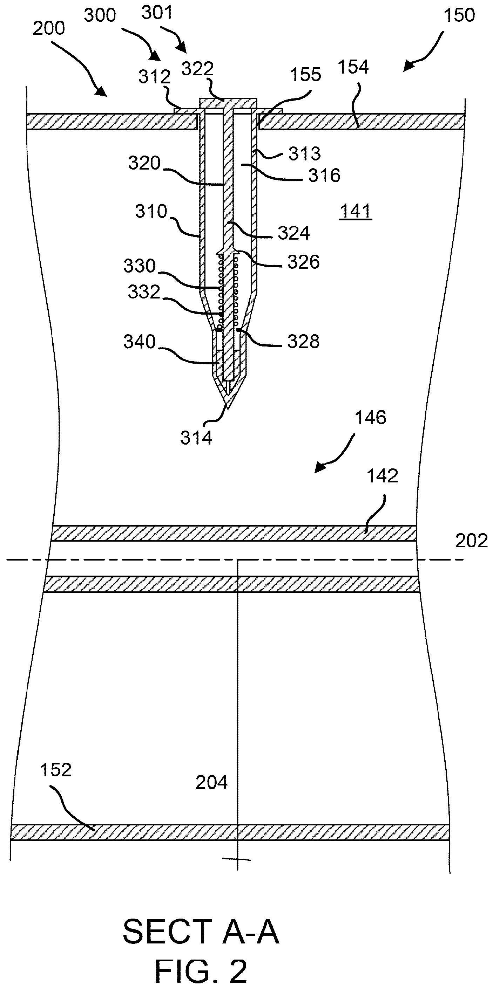

Referring now to FIG. 2, a cross-sectional view of a partition of the anti-icing system 150 along section line A-A from FIG. 1C is illustrated, in accordance with various embodiments. The anti-icing system 150 further comprises the detection system 300. The detection system 300 includes an over-temperature indication assembly 301. The overtemperature indication assembly 301 comprises a housing 310, a plunger 320, a biasing mechanism 330, and a thermally sensitive valve 340.

In various embodiments, the housing 310 is coupled to the radially outer wall 154 of the inlet cowl 200. In various embodiments, the housing 310 is bonded to (e.g., via an adhesive or the like), or mechanically fastened to (e.g., via nut plates, rivets, etc.) the radially outer wall 154. In various embodiments, the housing 310 comprises an elongated portion 313 extending radially inward (i.e., as defined relative to the longitudinal axis 104 from FIGs. 1A-B) from a flange 312 to a radially inner end 314. The elongated portion 313 extends through an aperture 155 in the radially outer wall 154 of the inlet cowl 200. The radially inner end 314 is disposed proximate the fluid conduit 142 disposed in the aft plenum 141. "Proximate", as referred to herein is within a "zone" in the aft plenum 141. The zone is defined as being between -20 degrees and 20 degrees (i.e., circumferentially) of a line 204 extending in a radial direction from the longitudinal axis 104 from FIGs. 1B-C, through a centerline 202 of the fluid conduit 142 and swept axially along the centerline 202 of the fluid conduit 142. Thus, the radially inner end is disposed as close to the fluid conduit 142, in accordance with various embodiments.

The housing 310 further comprises a blind recess disposed in the flange 312 and extending radially inward to the radially inner end 314 of the housing. In various embodiments, the plunger 320 comprises a plunger head 322 and a rod 324 extending from the plunger head 322 to the thermally sensitive valve 340 disposed adjacent to the radially inner end 314. In various embodiments, the plunger 320 further comprises a flange 326 and a stop 328. The flange 326 may extend radially outward (i.e., radially outward in a radial direction defined from a centerline of the rod 324) from the rod 324. The stop 328 may be spaced apart axially (i.e., axially along an axis defined by the rod 324) from the flange). The biasing mechanism 330 may be disposed axially between the stop 328 and the flange.

In various embodiments, the plunger head 322 and the flange 312 may add minimal, or negligible drag impact to the inlet cowl 200 of the nacelle 102.

In various embodiments, the biasing mechanism 330 may be a spring 332 (e.g., a compression spring, a torsion spring, a tension spring, etc.). Although illustrated in a compression spring configuration, the present disclosure is not limited in this regard. For example, various biasing mechanisms can be envisioned that would bias the plunger 320 in a radially outward (i.e., radially outward from the longitudinal axis 104) direction and be within the scope of this disclosure.

In various embodiments, the thermally sensitive valve 340 is disposed adjacent to the radially inner end 314 of the housing 310. In this regard, the thermally sensitive valve 340 is disposed proximate the fluid conduit 142. In various embodiments, the thermally sensitive valve 340 can be a simple insert configured to be disposed in the cavity 316 of the housing 310. The simple insert may be made of a metal that melts at a desired temperature (e.g., a threshold temperature). The simple insert may be made of eutectic or fusible alloys with low melting points, including alloys of lead, bismuth, and tin, and commonly known by names like Wood's Metal, Rose Metal, and Lipowitz's Alloy. Such metals are used in fire sprinkler valves, preventing pressurized water from exiting a pipe until triggered by heat, at which time the alloy softens sufficiently to release the plunger 320.

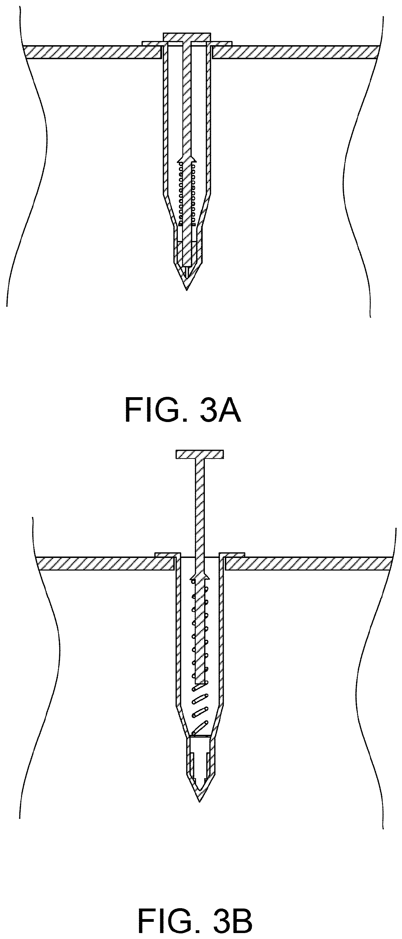

Thus, in response to being exposed to a temperature above a threshold temperature (e.g., during a leakage event of fluid conduit 142), the thermally sensitive valve 340 is configured to melt. In response to the thermally sensitive valve 340 melting, the rod 324 of the plunger 320 may be decoupled from the thermally sensitive valve 340. In this regard, the biasing mechanism 330 is configured to transition the plunger 320 from a retracted state (e.g., FIG. 3A) to a deployed state (e.g., FIG. 3B). In various embodiments, the plunger 320 may be configured in a manner to ensure that the plunger 320 is visible during a crew walkaround or during a scheduled maintenance in accordance with various embodiments. In this regard, the detection system 300 is configured to deploy in response to a hot air duct leak from the fluid conduit 142 in the aft plenum 141 of the inlet cowl 200. In response to deploying, the detection system 300 is configured to provide an indicator (e.g., the deployed plunger as shown in FIG. 3B) for indication during a crew walkaround or a during scheduled maintenance.

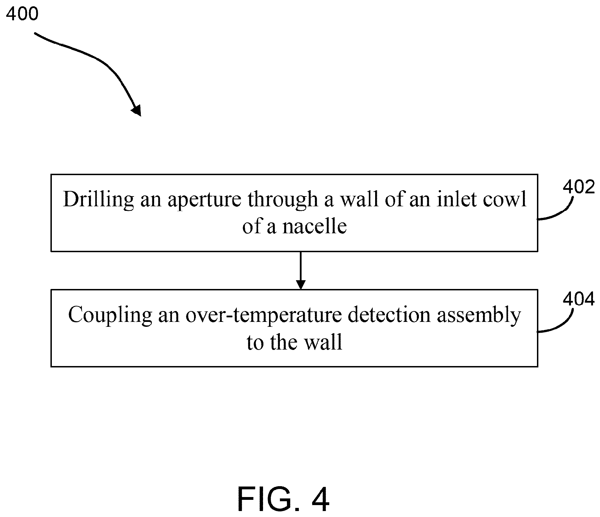

In various embodiments, the design of the detection system 300 from FIG 2 allows for a retrofitting process on typical inlet cowls. For example, a retrofitting process 400 for retrofitting a detection system 300 onto an inlet cowl 200 from FIG. 2 is illustrated in FIG. 4 in accordance with various embodiments. The retrofitting process 400 comprises drilling an aperture through a wall (e.g., radially outer wall 154 or aft bulkhead 138) of an inlet cowl 200 of a nacelle 102 (step 402). In response to drilling the aperture, an external environment of the inlet cowl 200 may be temporarily fluidly coupled to an aft plenum 141 of the inlet cowl 200.

In various embodiments, the retrofitting process 400 further comprises coupling an over-temperature indication assembly 301 to the wall (e.g., radially outer wall 154 or aft bulkhead 138) (step 404). In various embodiments, coupling the over-temperature indication assembly 301 to the wall may result in a portion of a housing for the overtemperature indication assembly 301 to be disposed proximate a fluid conduit disposed through the aft plenum 141. The fluid conduit may be a component within an anti-icing system 150 as described previously herein.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible within the scope of the appended claims.

## Claims

1. An inlet cowl (200) for a nacelle for a gas turbine engine (100) having a longitudinal axis (104), the inlet cowl (200) comprising:
a forward bulkhead (136) annularly arranged about the longitudinal axis (104);
an aft bulkhead (138) annularly arranged about the longitudinal axis (104) and spaced apart axially aft of the forward bulkhead (136);
an annular structure having a radially inner wall (152) spaced apart from a radially outer wall (154); and
a fluid conduit (142) extending axially through an aft plenum (141) defined axially between the aft bulkhead (138) and the forward bulkhead (136), the aft plenum (141) defined radially between the radially inner wall (152) and the radially outer wall (154),
**characterised in that**:
the inlet cowl (200) further comprises an over-temperature indication assembly (301) coupled to the radially outer wall (154) and/or the aft bulkhead (138), the overtemperature indication assembly (301) configured to transition from a retracted state to a deployed state in response to a portion of the over-temperature indication assembly (301) exceeding a temperature threshold.

2. The inlet cowl (200) of claim 1, further comprising a leading edge (134) spaced apart axially forward of the forward bulkhead (136) and partially defining a forward plenum (140), the fluid conduit (142) in fluid communication with the forward plenum (140).

3. The inlet cowl (200) of claim 1 or 2, wherein the over-temperature indication assembly (301) is disposed proximate the fluid conduit (142).

4. The inlet cowl (200) of any preceding claim, wherein the over-temperature indication assembly (301) comprises a housing (310), a plunger (320) disposed within the housing (310), a biasing mechanism (330) configured to bias the plunger (320) outward from the housing (310), and a thermally sensitive valve (340) coupled to the plunger (320) within the housing (310).

5. The inlet cowl (200) of claim 4, wherein the thermally sensitive valve (340) is configured to melt in response to being exposed to a temperature exceeding the temperature threshold.

6. The inlet cowl (200) of claim 4 or 5, wherein the biasing mechanism (330) is a spring (332).

7. The inlet cowl (200) of any of claims 4 to 6, wherein the over-temperature indication assembly (301) is coupled to the radially outer wall (154).

8. The inlet cowl (200) of claim 7, wherein the housing (310) comprises a flange (312), an elongated portion (313), and a radially inner end (314), the elongated portion (313) extending from the flange (312) to the radially inner end (314) and defining a recess therein.

9. The inlet cowl (200) of claim 8, wherein the thermally sensitive valve (340) is disposed in the recess proximate the radially inner end (314).

10. A method for installing an over-temperature indication assembly (301) for a gas turbine engine having a longitudinal axis (104), comprising:
forming an aperture (155) through an inlet cowl (200) of a nacelle (102), the aperture (155) fluidly coupling an external environment to an aft plenum (141) defined axially between an aft bulkhead (138) and a forward bulkhead (136) and radially between a radially inner surface of the inlet cowl (200) and a radially outer surface of the inlet cowl (200), wherein the aft bulkhead (138) and the forward bulkhead (136) are annularly arranged about the longitudinal axis (104);
disposing at least a portion of the over-temperature indication assembly (301) through the aperture (155); and
coupling the over-temperature indication assembly (301) to the inlet cowl (200), the over-temperature indication assembly (301) configured to transition from a retracted state to a deployed state in response to being exposed to a temperature that exceeds a temperature threshold.

11. The method of claim 10, wherein the aperture (155) is disposed proximate a fluid conduit (142) extending through the aft plenum (141) to a forward plenum (140) defined axially between the forward bulkhead (136) and a leading edge (134).

12. The method of claim 10 or 11, wherein a flange (312) of a housing (310) of the over-temperature indication assembly (301) is coupled to the inlet cowl (200).

## Patentansprüche

1. Einlasshaube (200) für eine Gondel für ein Gasturbinentriebwerk (100), das eine Längsachse (104) aufweist, wobei die Einlasshaube (200) Folgendes umfasst:
eine vordere Trennwand (136), die ringförmig um die Längsachse (104) angeordnet ist;
eine hintere Trennwand (138), die ringförmig um die Längsachse (104) angeordnet und axial hinter der vorderen Trennwand (136) beabstandet ist;
eine ringförmige Konstruktion, die eine radial innere Wand (152) aufweist, die von einer radial äußeren Wand (154) beabstandet ist; und
eine Fluidleitung (142), die sich axial durch einen hinteren Sammelraum (141) erstreckt, der axial zwischen der hinteren Trennwand (138) und der vorderen Trennwand (136) definiert ist, wobei der hintere Sammelraum (141) radial zwischen der radial inneren Wand (152) und der radial äußeren Wand (154) definiert ist, **dadurch gekennzeichnet, dass**:
die Einlasshaube (200) ferner eine Übertemperaturanzeigebaugruppe (301) umfasst, die an die radial äußere Wand (154) und/oder die hintere Trennwand (138) gekoppelt ist, wobei die Übertemperaturanzeigebaugruppe (301) dazu konfiguriert ist, als Reaktion darauf, dass ein Abschnitt der Übertemperaturanzeigebaugruppe (301) einen Temperaturschwellenwert überschreitet, von einem eingefahrenen Zustand in einen ausgefahrenen Zustand zu wechseln.

2. Einlasshaube (200) nach Anspruch 1, ferner umfassend eine Anströmkante (134), die axial vor der vorderen Trennwand (136) beabstandet ist und teilweise einen vorderen Sammelraum (140) definiert, wobei die Fluidleitung (142) in Fluidverbindung mit dem vorderen Sammelraum (140) steht.

3. Einlasshaube (200) nach Anspruch 1 oder 2, wobei die Übertemperaturanzeigebaugruppe (301) in der Nähe der Fluidleitung (142) angeordnet ist.

4. Einlasshaube (200) nach einem der vorhergehenden Ansprüche, wobei die Übertemperaturanzeigebaugruppe (301) ein Gehäuse (310), einen innerhalb des Gehäuses (310) angeordneten Kolben (320), einen Vorspannmechanismus (330), der dazu konfiguriert ist, den Kolben (320) von dem Gehäuse (310) nach außen vorzuspannen, und ein wärmeempfindliches Ventil (340), das an den Kolben (320) innerhalb des Gehäuses (310) gekoppelt ist, umfasst.

5. Einlasshaube (200) nach Anspruch 4, wobei das wärmeempfindliche Ventil (340) dazu konfiguriert ist, als Reaktion darauf, dass es einer Temperatur ausgesetzt ist, die den Temperaturschwellenwert überschreitet, zu schmelzen.

6. Einlasshaube (200) nach Anspruch 4 oder 5, wobei der Vorspannmechanismus (330) eine Feder (332) ist.

7. Einlasshaube (200) nach einem der Ansprüche 4 bis 6, wobei die Übertemperaturanzeigebaugruppe (301) an die radial äußere Wand (154) gekoppelt ist.

8. Einlasshaube (200) nach Anspruch 7, wobei das Gehäuse (310) einen Flansch (312), einen länglichen Abschnitt (313) und ein radial inneres Ende (314) umfasst, wobei sich der längliche Abschnitt (313) von dem Flansch (312) zu dem radial inneren Ende (314) erstreckt und darin eine Aussparung definiert.

9. Einlasshaube (200) nach Anspruch 8, wobei das wärmeempfindliche Ventil (340) in der Aussparung in der Nähe des radial inneren Endes (314) angeordnet ist.

10. Verfahren zum Installieren einer Übertemperaturanzeigebaugruppe (301) für ein Gasturbinentriebwerk, das eine Längsachse (104) aufweist, das Folgendes umfasst:
Bilden einer Öffnung (155) durch eine Einlasshaube (200) einer Gondel (102), wobei die Öffnung (155) eine äußere Umgebung fluidisch an einen hinteren Sammelraum (141) koppelt, der axial zwischen einer hinteren Trennwand (138) und einer vorderen Trennwand (136) und radial zwischen einer radial inneren Fläche der Einlasshaube (200) und einer radial äußeren Fläche der Einlasshaube (200) definiert ist, wobei die hintere Trennwand (138) und die vordere Trennwand (136) ringförmig um die Längsachse (104) angeordnet sind;
Anordnen mindestens eines Abschnitts der Übertemperaturanzeigebaugruppe (301) durch die Öffnung (155); und
Koppeln der Übertemperaturanzeigebaugruppe (301) an die Einlasshaube (200), wobei die Übertemperaturanzeigebaugruppe (301) dazu konfiguriert ist, als Reaktion darauf, dass sie einer Temperatur ausgesetzt ist, die einen Temperaturschwellenwert überschreitet, von einem eingefahrenen Zustand in einen ausgefahrenen Zustand zu wechseln.

11. Verfahren nach Anspruch 10, wobei die Öffnung (155) in der Nähe einer Fluidleitung (142) angeordnet ist, die sich durch den hinteren Sammelraum (141) zu einem vorderen Sammelraum (140) erstreckt, der axial zwischen der vorderen Trennwand (136) und einer Anströmkante (134) definiert ist.

12. Verfahren nach Anspruch 10 oder 11, wobei ein Flansch (312) eines Gehäuses (310) der Übertemperaturanzeigebaugruppe (301) an die Einlasshaube (200) gekoppelt ist.

## Revendications

1. Capot d'entrée (200) pour une nacelle pour un moteur à turbine à gaz (100) ayant un axe longitudinal (104), le capot d'entrée (200) comprenant :
une cloison avant (136) agencée de manière annulaire autour de l'axe longitudinal (104) ;
une cloison arrière (138) agencée de manière annulaire autour de l'axe longitudinal (104) et espacée axialement à l'arrière de la cloison avant (136) ;
une structure annulaire ayant une paroi radialement interne (152) espacée d'une paroi radialement externe (154) ; et
un conduit de fluide (142) se prolongeant axialement à travers un plénum arrière (141) défini axialement entre la cloison arrière (138) et la cloison avant (136), le plénum arrière (141) étant défini radialement entre la paroi radialement interne (152) et la paroi radialement externe (154), **caractérisé en ce que** :
le capot d'entrée (200) comprend également un ensemble d'indication de surchauffe (301) couplé à la paroi radialement externe (154) et/ou à la cloison arrière (138), l'ensemble d'indication de surchauffe (301) étant configuré pour passer d'un état rétracté à un état déployé en réponse à une partie de l'ensemble d'indication de surchauffe (301) dépassant un seuil de température.

2. Capot d'entrée (200) selon la revendication 1, comprenant également un bord d'attaque (134) espacé axialement vers l'avant de la cloison avant (136) et définissant partiellement un plénum avant (140), le conduit de fluide (142) étant en communication fluidique avec le plénum avant (140).

3. Capot d'entrée (200) selon la revendication 1 ou 2, dans lequel l'ensemble d'indication de surchauffe (301) est disposé à proximité du conduit de fluide (142).

4. Capot d'entrée (200) selon une quelconque revendication précédente, dans lequel l'ensemble d'indication de surchauffe (301) comprend un boîtier (310), un piston (320) disposé à l'intérieur du boîtier (310), un mécanisme de sollicitation (330) configuré pour solliciter le piston (320) vers l'extérieur du boîtier (310), et une vanne thermosensible (340) couplée au piston (320) à l'intérieur du boîtier (310).

5. Capot d'entrée (200) selon la revendication 4, dans lequel la vanne thermosensible (340) est configurée pour fondre en réponse à une exposition à une température dépassant le seuil de température.

6. Capot d'entrée (200) selon la revendication 4 ou 5, dans lequel le mécanisme de sollicitation (330) est un ressort (332).

7. Capot d'entrée (200) selon l'une quelconque des revendications 4 à 6, dans lequel l'ensemble d'indication de surchauffe (301) est couplé à la paroi radialement externe (154).

8. Capot d'entrée (200) selon la revendication 7, dans lequel le boîtier (310) comprend une bride (312), une partie allongée (313) et une extrémité radialement interne (314), la partie allongée (313) se prolongeant de la bride (312) à l'extrémité radialement interne (314) et définissant un évidement dans celle-ci.

9. Capot d'entrée (200) selon la revendication 8, dans lequel la vanne thermosensible (340) est agencée dans l'évidement à proximité de l'extrémité radialement interne (314).

10. Procédé d'installation d'un ensemble d'indication de surchauffe (301) pour un moteur à turbine à gaz ayant un axe longitudinal (104), comprenant :
la formation d'une ouverture (155) à travers un capot d'entrée (200) d'une nacelle (102), l'ouverture (155) couplant fluidiquement un environnement externe à un plénum arrière (141) défini axialement entre une cloison arrière (138) et une cloison avant (136) et radialement entre une surface radialement interne du capot d'entrée (200) et une surface radialement externe du capot d'entrée (200), dans lequel la cloison arrière (138) et la cloison avant (136) sont agencées de manière annulaire autour de l'axe longitudinal (104) ;
la disposition d'au moins une partie de l'ensemble d'indication de surchauffe (301) à travers l'ouverture (155) ; et
le couplage de l'ensemble d'indication de surchauffe (301) au capot d'entrée (200), l'ensemble d'indication de surchauffe (301) étant configuré pour passer d'un état rétracté à un état déployé en réponse à une exposition à une température qui dépasse un seuil de température.

11. Procédé selon la revendication 10, dans lequel l'ouverture (155) est agencée à proximité d'un conduit de fluide (142) se prolongeant à travers le plénum arrière (141) jusqu'à un plénum avant (140) défini axialement entre la cloison avant (136) et un bord d'attaque (134).

12. Procédé selon la revendication 10 ou 11, dans lequel une bride (312) d'un boîtier (310) de l'ensemble d'indication de surchauffe (301) est couplée au capot d'entrée (200).
